# EUROPEAN PATENT APPLICATION

(11) **EP 2 985 685 A1**
(43) Date of publication of application: **17.02.2016**
(21) Application number: 13881755.6
(22) Date of filing: 24.10.2013
(51) Int. Cl.: G06F 3/048

(54) **ICON ARRANGEMENT METHOD, APPARATUS, AND DEVICE**

(30) Priority: 08.04.2013 CN 201310120284
(71) Applicant: Xiaomi Inc., Beijing 100085 (CN)
(72) Inventor: WANG, Ying, Beijing 100085 (CN); SUN, Daqing, Beijing 100085 (CN); XU, Fei, Beijing 100085 (CN); LI, Weixing, Beijing 100085 (CN)
(74) Representative: Delumeau, François Guy
(86) International application number: PCT/CN2013/085872
(87) International publication number: WO 2014/166226

(57) **Abstract**

The present invention relates to the field of mobile terminals. Disclosed are an icon arrangement method, apparatus, and device. In the icon arrangement method, apparatus, and device according to embodiments of the present invention, a buffer area for storing to-be-arranged icons is established, and it is allowed to arrange multiple icons, so that the icon arrangement operation is easy and time-saving; in addition, because the buffer area can temporarily store the to-be-arranged icons that a user selects, the user is allowed to replace the selected icons during the arrangement operation, so that the icon arrangement operation is more human.

## Description

### CROSS REFERENCE TO RELATED APPLICATIONS

The present application claims the priority to and the benefit of Chinese Patent Application No. 201310120284.3, filed on April 8, 2013, which is incorporated herein by reference in its entirety.

### TECHNICAL FIELD

The present disclosure relates to the field of mobile terminal, and particularly to a method, an apparatus and a device for arranging icons.

### BACKGROUND

With development of smart mobile terminals, users are increasingly relying on smart mobile terminals. Due to intelligence and convenience of the smart mobile terminals, various APPs (Applications), such as office APPs, game APPs, photo APPs and the like, are provided on Internet for being installed in the smart mobile terminals so as to perform various functions.

After the APP is installed by a user, an icon is generated on a desktop of the smart terminal for being clicked by the user to start the APP. At present, the user generally installs a great deal of APPs in the mobile terminal. Therefore, there are a great deal of icons on the desktop. The operating system of the mobile terminal has the function of arranging icons, such as moving icons, deleting icons, collapsing icons into a folder.

However, the conventional operation of arranging icons is bothersome. Taking the operation of moving icons as an example, if the user wants to simultaneously move a plurality of icons to be arranged on the screen, the user needs to firstly touch the desktop of the mobile terminal to enter an edit mode, long press an icon to be arranged to select the icon, slides the screen with another hand, and then arrange the icon to be arranged to a target location when a target screen is shown. Such operation only can move the icons one by one.

Therefore, the conventional method for arranging icons can only perform operation to a single icon to be arranged, and the operation for arrangement is complex and the operation is time-consuming.

### SUMMARY

The embodiments of the present disclosure provide a method, an apparatus and a device for arranging icons.

In one aspect, the present disclosure provides a method for arranging icons, which method includes:
creating a buffer region, marking icons selected by a user as icons to be arranged and storing the icons to be arranged in the buffer region; and
performing an arranging operation corresponding to an arranging instruction issued by the user on the icons to be arranged in the buffer region according to the arranging instruction.

In another aspect, the present disclosure provides an apparatus for arranging icons, which apparatus includes:
a creating module configured to create a buffer region;
a marking module configured to mark icons selected by a user as icons to be arranged and storing the icons to be arranged in the buffer region; and
an arranging module configured to perform an arranging operation corresponding to an arranging instruction issued by the user on the icons to be arranged in the buffer region according to the arranging instruction.

In further another aspect, the present disclosure provides a device, which device includes:
one or more processors;
a memory;
a displaying screen; and
one or more modules stored in the memory and configured to be performed by the one or more processors, the one or more modules are configured to have the following functions:
   creating a buffer region, marking icons selected by a user as icons to be arranged and storing the icons to be arranged in the buffer region; and
performing an arranging operation corresponding to an arranging instruction issued by the user on the icons to be arranged in the buffer region according to the arranging instruction.

It should be understood that the above general description and the following detailed description are for illustrative purpose only, rather than to limit the present disclosure.

The embodiments of the present disclosure at least have the following advantages.

Through the method, the apparatus and the device for arranging icons in the embodiments of the present disclosure, the buffer region for storing the icons to be arranged is created to allow arranging operation of a plurality of icons, so that the operation for arranging icons is easy and timesaving; meanwhile, the user may go back on his words during the arranging process of a plurality of icons since the buffer region may temporarily store the icons to be arranged selected by the user, so that the operation for arranging icons becomes more humane.

### BRIEF DESCRIPTION OF THE DRAWINGS

Fig. 1 is an illustrative flow chart showing one method for arranging icons provided by an embodiment of the present disclosure;
Fig. 2 is an illustrative flow chart showing another method for arranging icons provided by an embodiment of the present disclosure;
Fig. 3 is an illustrative diagram showing that a user clicks any icon in an edit mode provided by an embodiment of the present disclosure;
Fig. 4 is a diagram showing a display effect that a batch arranging mode is triggered provided by an embodiment of the present disclosure;
Fig. 5 is a diagram showing a display effect that the user selects icons to be arranged of a plurality of APPs provided by an embodiment of the present disclosure;
Fig. 6 is a diagram showing a display effect that the user clicks a folder icon in the batch arranging mode provided by an embodiment of the present disclosure;
Fig. 7 is a diagram showing a display effect that the user selects icons to be arranged of *n* APPs provided by an embodiment of the present disclosure;
Fig. 8 is an illustrative diagram showing an operation of closing the folder in the batch arranging mode of the icons provided by an embodiment of the present disclosure;
Fig. 9 is a diagram showing a display effect that a single icon is moved provided by an embodiment of the present disclosure;
Fig. 10 is a diagram showing a display effect that a certain icon to be arranged is long pressed provided by an embodiment of the present disclosure;
Fig. 11 is a diagram showing a display effect that two-finger pinch is performed on a first preset area so as to select a plurality of icons to be arranged provided by an embodiment of the present disclosure;
Fig. 12 is a diagram showing a display effect that the plurality of icons to be arranged are selected provided by an embodiment of the present disclosure;
Fig. 13 is a diagram showing a display effect that a target icon including the plurality of icons to be arranged is clicked provided by an embodiment of the present disclosure;
Fig. 14 is a diagram showing a display effect that the plurality of icons to be arranged have been filled into empty spaces when the empty spaces are enough provided by an embodiment of the present disclosure;
Fig. 15 is a diagram showing a display effect that the plurality of icons to be arranged are filled into the empty spaces when the empty spaces are not enough provided by an embodiment of the present disclosure;
Fig. 16 is an illustrative diagram showing that an insert location for the target icon is selected on the screen through dragging provided by an embodiment of the present disclosure;
Fig. 17 is an illustrative diagram showing that the icons are filled at the location of the finger through inserting and pushing provided by an embodiment of the present disclosure;
Fig. 18 is an illustrative diagram showing an operation that the target icon is dragged to an area occupied by an icon provided by an embodiment of the present disclosure;
Fig. 19 is an illustrative diagram showing an operation effect that a folder is generated through overlaying provided by an embodiment of the present disclosure;
Fig. 20 is a diagram showing a display effect that the user drags the target icon to a removing bar provided by an embodiment of the present disclosure;
Fig. 21 is an illustrative diagram showing an effect of prompting for removing provided by an embodiment of the present disclosure;
Fig. 22 is a diagram showing a display effect that the user clicks widget in the batch arranging mode provided by an embodiment of the present disclosure; and
Fig. 23 is an illustrative diagram of a structure of an apparatus for arranging icons provided by an embodiment of the present disclosure.

Some specific embodiments of the present disclosure are illustrated through the above mentioned drawings, followed by description in more detail hereinafter. Such drawings and description are provided to explain the concept of the present disclosure for those skilled in the art with reference to particular embodiments, rather than to limit the scope of the disclosed conception in any manner.

### DESCRIPTION OF THE EMBODIMENTS

Hereinafter, the implementations of methods, apparatuses and devices for arranging icons provided by the embodiments of the present disclosure will be described in detail with reference to the accompanying drawings.

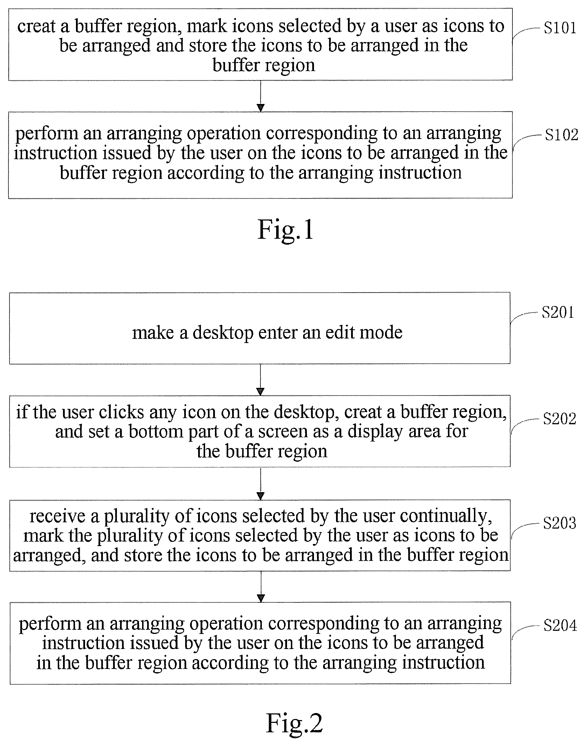

Firstly, an embodiment of the present disclosure provides a method for arranging icons, as shown in Fig. 1, the method includes the following steps.

S101: a buffer region is created, icons selected by a user are marked as icons to be arranged and are stored in the buffer region.

As one preferable implementation, before step S101, the method may further include:
making a desktop enter an edit mode and setting a first preset area on the desktop as a plug-in selecting area for selection by the user.

Preferably, step S101 may adopt the following manner:
when it is detected that any icon on the desktop is clicked, the buffer region is created and the first preset area on the desktop is set as a display area for the icons to be arranged; and
at least one icon selected by the user is marked as the icons to be arranged, is stored in the buffer region, and is displayed in the first preset area.

Preferably, the step of marking at least one icon selected by the user as the icons to be arranged, storing the icons to be arranged in the buffer region, and displaying them in the first preset area may adopt the following manner:
at least one icon selected by the user is marked as the icons to be arranged, and is stored in the buffer region in order of a sequence that icons are selected by the user, and the at least one icon is displayed in the first preset area one by one in order of the sequence that icons are selected by the user.

Preferably, if the icon selected by the user is a folder icon, the step of marking the icon selected by the user as the icons to be arranged and storing them in the buffer region may adopt the following manner:
all icons in the folder are displayed, and at least one icon in the folder selected by the user is marked as the icons to be arranged and stored in the buffer region.

Preferably, after the step of marking at least one icon in the folder selected by the user as the icons to be arranged and storing them in the buffer region, the method may further include:
closing the folder if it is detected that any area in the display area of the folder other than the display area of all the icons in the folder and a title of the folder is clicked.

S102: an arranging operation corresponding to an arranging instruction issued by the user is performed on the icons to be arranged in the buffer region according to the arranging instruction.

Preferably, step S102 may adopt the following manner:
if the icon to be arranged in the first preset area is clicked, the clicked icon is placed on the first empty space on the desktop as a target icon.

Preferably, step S102 may also adopt the following manner:
if any icon to be arranged in the first preset area has been pressed over a first preset time, the icon which has been pressed over the first preset time is set as the target icon, and a second preset area on the desktop is set as a display area for a removing bar;
if the target icon is dragged to the second preset area, the target icon is removed and an APP corresponding to the target icon is uninstalled;
if the target icon is dragged to a location without an icon on the desktop, the location is filled with the target icon, or the target icon is filled into the location through inserting and pushing; and
if the target icon is dragged to a region occupied by an icon on the desktop, a folder with a preset name is generated at the region occupied by the icon, and both of the icon occupying the region and the target icon are put into the folder with the preset name.

In embodiments of the present disclosure, the inserting and pushing means continuously inserting a plurality of icons to be arranged of the target icon into the location (between two icons) selected by the user on the desktop, and if no empty space is existing between the two icons or the empty spaces between two icons are not enough, the two icons and adjacent icons are pushed forward or backward, which will not be repeated hereinafter.

In the present embodiment, preferably, the icon is firstly pushed backward to provide an empty space for the target icon.

Preferably, step S102 may also adopt the following manner:
if a preset event is triggered, a number of all the icons to be arranged stored in the buffer region is displayed, and all the icons to be arranged stored in the buffer region are set as the target icon;
if the target icon is clicked, the target icon is filled into the empty spaces on the desktop one by one in order of the sequence that the icons are selected by the user;
if the target icon is pressed over a second preset time, the second preset area is set as the display area of the removing bar, and if the target icon is dragged to the second preset area, the target icon is removed and an APP corresponding to the target icon is uninstalled;
if the target icon is dragged to the region occupied by an icon on the desktop, a folder with a preset name is generated at the region occupied by the icon, and both of the icon occupying the region and the target icon are put into the folder with the preset name; and
if the target icon is dragged to the location without an icon on the desktop, the location (i.e., the location of the user's finger, which may be an empty space on the desktop or space between any two icons) is filled with the target icon, or the target icon is filled into the location through inserting and pushing.

Preferably, the step of filling the target icon into the empty spaces on the desktop one by one in order of the sequence that the icons are selected by the user may adopt the following manner:
it is determined that whether the empty spaces on the desktop are enough;
if the empty spaces on the desktop are enough, the target icon is filled into the empty spaces on the desktop one by one in order of the sequence that the icons are selected by the user; and
if the empty spaces on the desktop are not enough, icons to be filled are determined according to a number of the empty spaces and the sequence that the icons are selected by the user, and the icons to be filled are filled into the empty spaces on the desktop one by one in order of the sequence that the icons are selected by the user.

In embodiments of the present disclosure, the preset event means an event that two contacts moves relative to one another occurred in the first preset area (such as two-finger pinch), or means an event that a single contact unilaterally moves occurred in the first preset area (such as pushing the icons to be arranged in the first preset area by one finger along an edge of the screen). However, the preset event is not limited to the above two events.

Preferably, after step S102, the method may further include:
removing the icon to be arranged which has been arranged from the buffer region.

According to the method for arranging icons provided by the embodiment of the present disclosure, the buffer region for storing the icons to be arranged is created to allow arranging operation of a plurality of icons, so that the operation for arranging icons is easy and timesaving; meanwhile, the user may go back on his words during the arranging process of a plurality of icons since the buffer region may temporarily store the icons to be arranged selected by the user, so that the operation for arranging icons becomes more humane.

The embodiment of the present disclosure also discloses another method for arranging icons, which may be implemented in a desktop management APP of a mobile terminal. Taking an Android phone as an example, as shown in Fig. 2, the method may include the following steps.

S201: a desktop enters an edit mode.

The above edit mode is the same as that in the conventional art, i.e., the desktop enters an editable state. A user may perform two-finger pinch on the screen such that the desktop enters the edit mode.

Additionally, entering the edit mode may be triggered by any manner preset by a developer or the user, for example, by long pressing a blank area on the desktop or selecting a menu option to enter the edit mode.

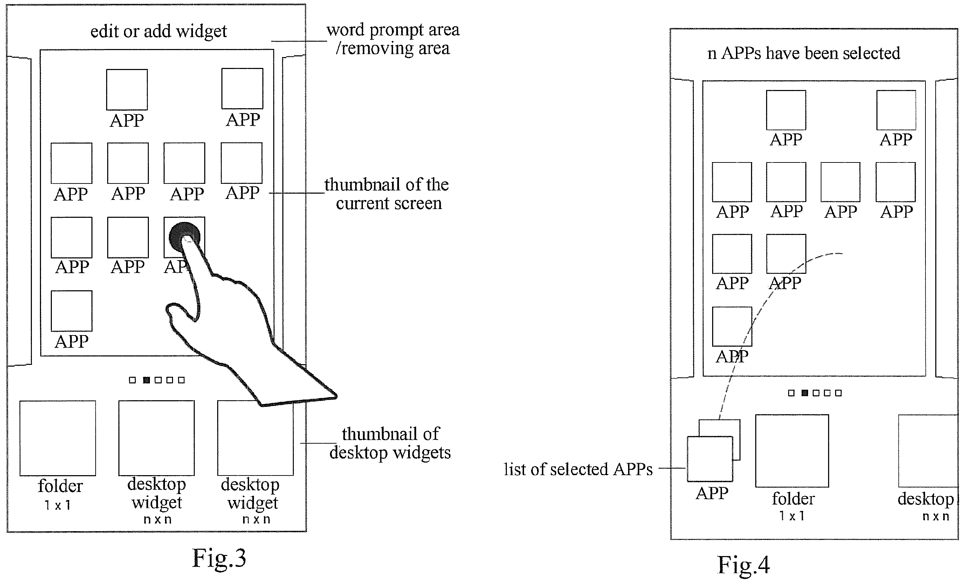

Fig. 3 is an illustrative diagram showing that the user clicks any icon in the edit mode. In Fig. 3, a top part (i.e., the second preset area) of the screen is a text prompt area/removing area (removing bar), a middle part of the screen is a thumbnail of the current screen for displaying APP icons on the current screen, which icons may be edited by the user, and a bottom part of the screen (i.e., the first preset area) is thumbnails of desktop widgets for displaying Widget (such as folders, plug-ins or desktop widgets) to be selected by the user.

S202: if the user clicks any icon on the desktop, a buffer region is created, and the bottom part of the screen is set as a display area for the buffer region.

The buffer region is a buffer space for storing one or more icons to be arranged selected by the user, and is used to assist the user to perform a batch process for the icons, i.e., to enter a batch arranging mode.

The triggering condition of the batch arranging mode is that any icon is clicked by the user in the edit mode.

It should be explained that in order to facilitate the user to arrange the icons in batch mode intuitively, after the batch arranging mode is triggered, the thumbnails of desktop widgets in the first preset area are replaced with the display area of the corresponding buffer region, the icons to be arranged stored in the buffer region are displayed on the display area, and icons to be arranged in the thumbnail of the current screen are removed.

Fig. 4 is a diagram showing an effect of triggering the batch arranging mode. In Fig. 4, the first preset area is replaced so as to display a list of the selected APPs, and in order to improve user experience, an animation showing that a first icon selected by the user falls into the first preset area is output.

S203: a plurality of icons selected by the user are continually received, are marked as icons to be arranged and are stored in the buffer region.

The step of marking the plurality of icons selected by the user as the icons to be arranged may adopt the following manner:
the icons selected by the user are stored in the buffer region, and the display of these icons are cleaned from the screen.

The form of the above marking process is as follows:
the icons to be arranged selected by the user fall into the first preset area one by one.

As one preferred implementation, during marking the icons to be arranged, the icons are remarked in order of the sequence that the icons are selected by the user.

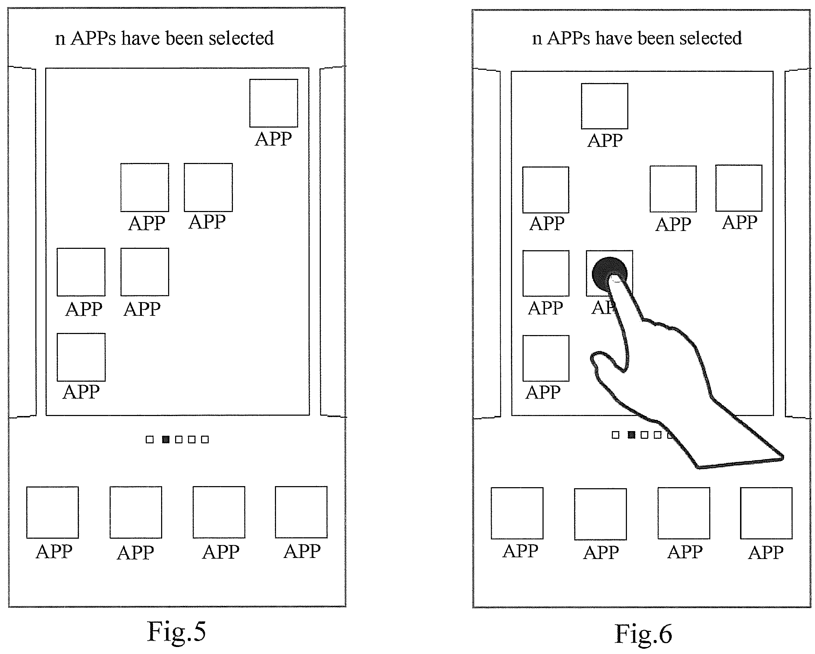

Fig. 5 is a diagram showing a display effect that the user selects icons to be arranged of a plurality of APPs.

It should be explained that in the relevant technology, icons on the desktop include at least the following two types: an APP icon and a folder icon.

As one preferred implementation, one folder icon, which facilitates the user to create a folder on the desktop, is also displayed in the first preset area.

Fig. 6 is a diagram showing a display effect that the user clicks the folder icon in the batch arranging mode.

If the icon selected by the user is a folder, step S203 may be as follows:
all the icons in the folder are displayed, the icons in the folder selected by the user are marked as icons to be arranged and are stored in the buffer region; preferably, the top part of the screen displays the number of the APP icons selected by the user at the same time.

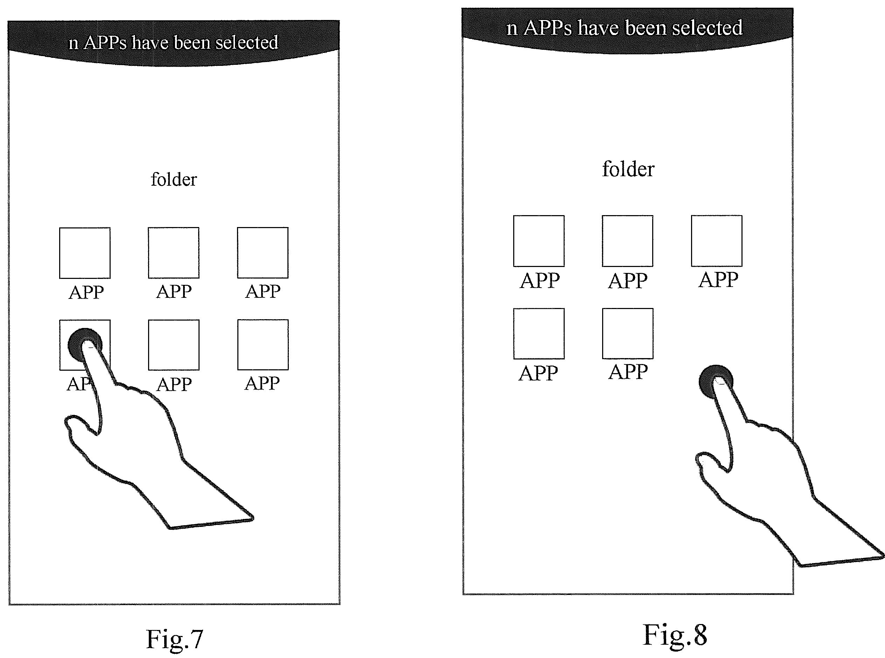

Fig. 7 is a diagram showing a display effect that the user selects icons of *n* APPs.

As one preferred implementation, if the selection of icons in the folder is finished, the user may click a blank area (a display area of the folder except areas occupied by APP icons and a folder title) in the display area of the folder to close the folder.

Fig. 8 is an illustrative diagram showing an operation of closing the folder in the batch arranging mode of the icons.

S204: an arranging operation corresponding to an arranging instruction issued by the user is performed on the icons to be arranged in the buffer region according to the arranging instruction.

To meet various arranging requirements of the user, the embodiments provide various arranging manners, so as to perform different arranging operations on the icons to be arranged according to different arranging instructions.

Preferably, the above arranging instructions at least include:
moving a single icon, removing a single icon, moving a plurality of icons, removing a plurality of icons, etc.

Hereinafter, the description will be given by taking the above four instructions as examples.

### (1) moving a single icon

If the user clicks (e.g., click once) the icons to be arranged in the first preset area, the clicked icons to be arranged are filled into the first empty space on the current screen as a target icon, and the clicked icons to be arranged are removed from the buffer region (the display of the clicked icons to be arranged in the first preset area is also cancelled).

Preferably, the form of clicking the icon so as to be filled into the first empty space may be as follows: the clicked icon to be arranged moves up to the first empty space on the current screen from the first preset area.

The empty space means an area on which no icon is placed in the display area on the screen.

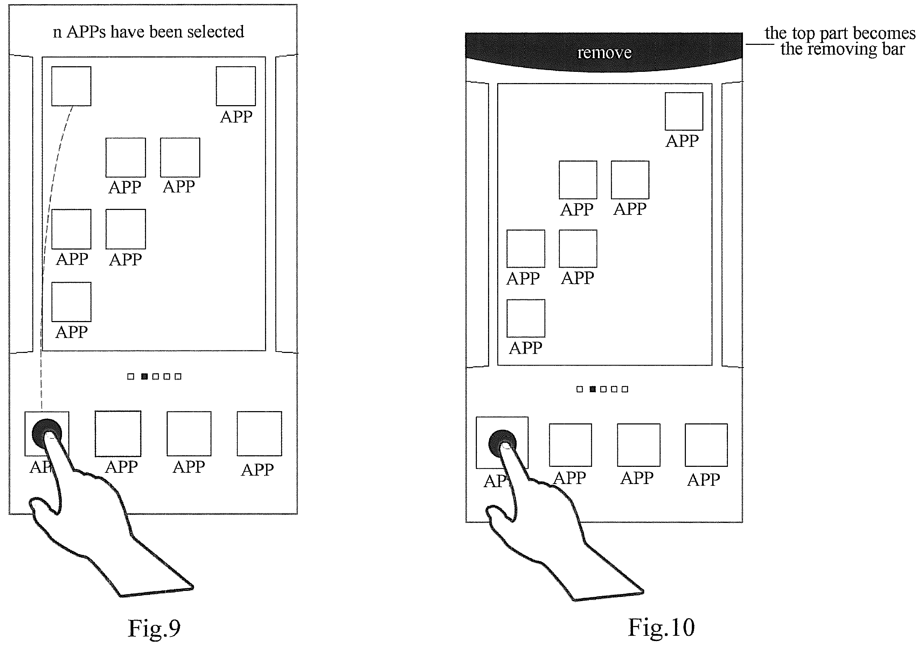

Fig. 9 is a diagram showing a display effect that a single icon is moved.

### (2) removing a single icon

If the user long presses an icon (i.e., presses an icon over a preset time), the long-pressed icon is set as the target icon, and the second preset area is set to display the removing bar which is used to remove icons to be arranged. If the user drags the target icon to the display area of the removing bar, the target icon is removed and the APP corresponding to the target icon is uninstalled.

Fig. 10 is a diagram showing a display effect that a certain icon to be arranged is long pressed.

Additionally, when the long-pressed icon is dragged to an empty space on the desktop or a location between any two icons, the empty space may also be filled or the location may be filled through inserting and pushing.

The inserting and pushing means that the icons to be arranged in the target icon are continuously inserted into the location on the desktop selected by the user (between two icons), if there is no empty space between the two icons or the empty spaces between the two icons are not enough, the two icons and adjacent icons are pushed forward or backward.

In the present embodiment, preferably, the icon is firstly pushed backward to provide an empty space for the target icon.

It should be explained that the icons in the buffer region may be displayed through horizontal sliding on the first preset area in any arranging process.

### (3) moving a plurality of icons

In the process of moving a plurality of icons, the plurality of icons should be selected firstly. The manner of triggering each of the plurality of icons to be selected may be performed through two-finger pinch on the first preset area.

It should be explained that the manner of triggering each of the plurality of icons to be selected is not limited to the two-finger pinch on the first preset area, but may be any preset manner, such as pushing the icons to be arranged in the first preset area by one finger along an edge of the screen, and shaking.

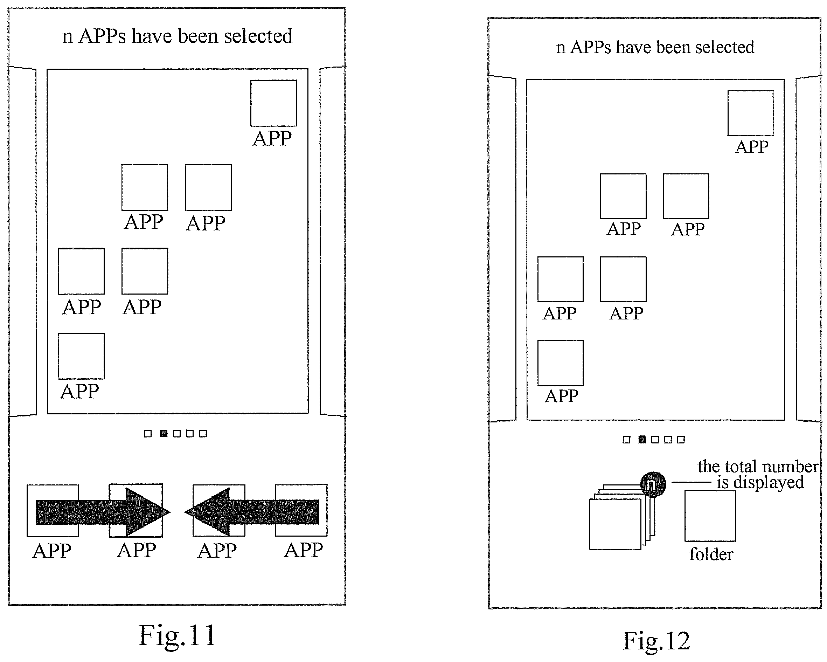

Fig. 11 is a diagram showing a display effect that the two-finger pinch is performed on the first preset area so as to select a plurality of icons to be arranged.

Fig. 12 is a diagram showing a display effect that the plurality of icons to be arranged are selected.

Preferably, as shown in Fig. 12, after the plurality of icons to be arranged are selected, the selected plurality of icons are shown as *n* stacked icons, and the *n* stacked icons are set as the target icon, wherein *n* is the number of the selected icons to be arranged.

It should be explained that the moving of a plurality of icons at least includes the following three manners.

### First manner

The first manner at least includes the following two cases.

a) If the target icon is clicked by the user, the icons to be arranged included in the target icon are filled into the empty spaces on the current screen in order of the sequence that the icons are selected by the user (the sequence selected in step S203).

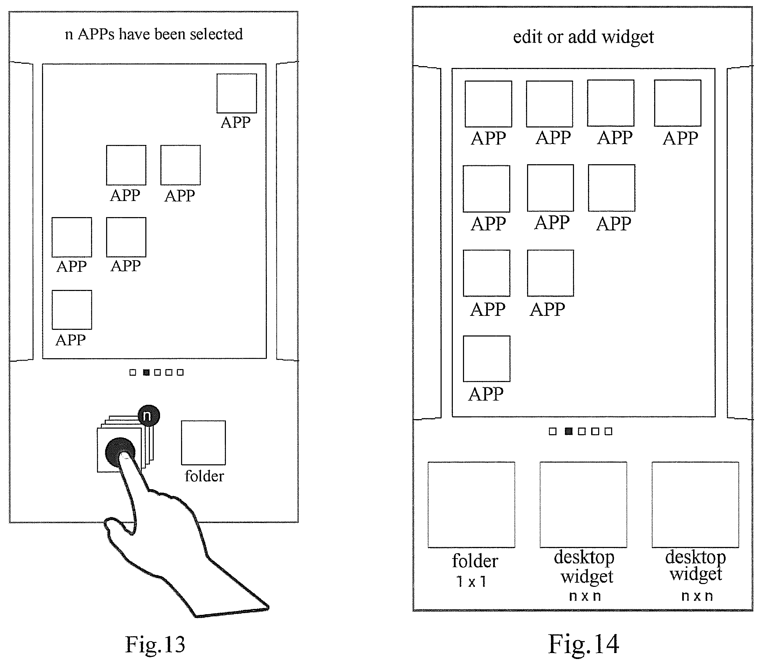

Fig. 13 is a diagram showing a display effect that the target icon including the plurality of icons to be arranged is clicked.

Preferably, the method further includes determining whether the empty spaces on the current screen are enough to arrange the plurality of icons to be arranged included in the target icon, when filling the empty spaces.

If the empty spaces are enough, the desktop reverts to the edit mode after filling the target icon is completed.

Fig. 14 is a diagram showing a display effect that the plurality of icons to be arranged have been filled when the empty spaces are enough.

If the empty spaces are not enough, the icons are filled in order of the sequence that the icons are selected by the user. The icons which cannot be filled into the empty spaces fall back to the first preset area; meanwhile, the second preset area displays the number of the icons to be arranged which cannot be filled into the empty spaces.

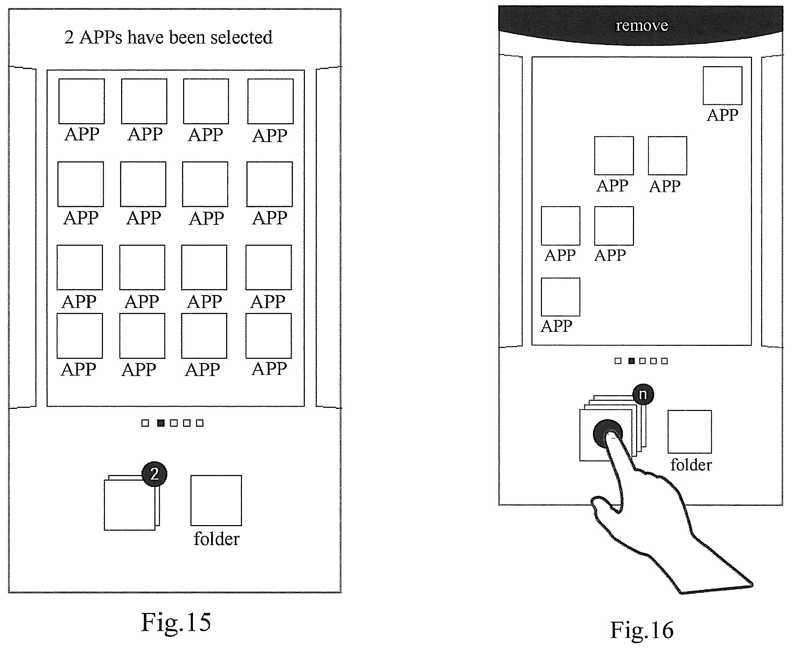

Fig. 15 is a diagram showing that the plurality of icons to be arranged are filled when the empty spaces are not enough.

b) if the target icon is long pressed by the user (i.e., pressed over the preset time) and the target icon is dragged to the thumbnail area on the desktop, the target icon is filled into the space between the icons on the desktop through inserting and pushing.

Preferably, the inserting and pushing means a plurality of icons to be arranged of the target icon are continuously inserted into the location selected by the user on the desktop (between two icons), and if there is no empty space between the two icons or the empty space between two icons are not enough, the two icons and adjacent icons are pushed forward or backward.

In the present embodiment, preferably, the icon is firstly pushed backward to provide an empty space for the target icon.

Fig. 16 is an illustrative diagram showing that an insert location for the target icon is selected on the screen through dragging.

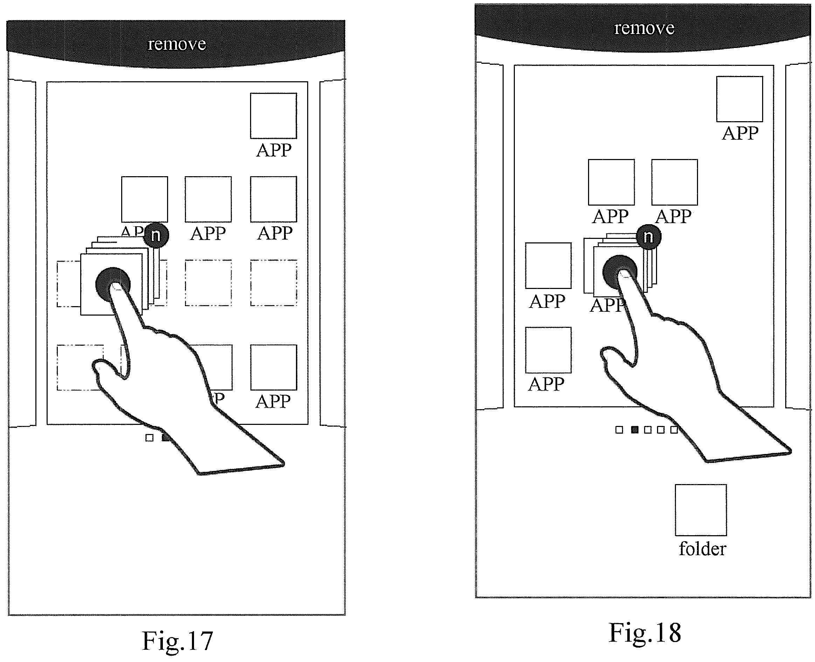

Fig. 17 is an illustrative diagram showing that the icons are filling into a location of the finger through inserting and pushing.

It should be explained that in the case (b), it is still needed to determine whether the empty spaces on the current screen are enough to place the plurality of icons included in the target icon; if the empty spaces are enough, the desktop returns to a home page of the edit mode; if the empty spaces are not enough, the icons are filled into the space through inserting and pushing in priority of the sequence that the icons are selected by the user, the icons which cannot be filled into the space fall back to the first preset area, meanwhile the second preset area displays the number of the icons to be arranged which cannot be filled into the space. The conditions that the space is enough or is not enough are similar to those shown in Figs. 13 and 14, which will not be repeated hereinafter.

### Second manner

If the target icon is long pressed by the user (i.e., pressed over the preset time) and the target icon is dragged to the location occupied by an APP icon in the display area, a folder with a preset name is generated and the icons to be arranged included in the target icon and the APP icon are put into the folder with the preset name.

Fig. 18 is an illustrative diagram showing an operation that the target icon is dragged to an area occupied by an icon.

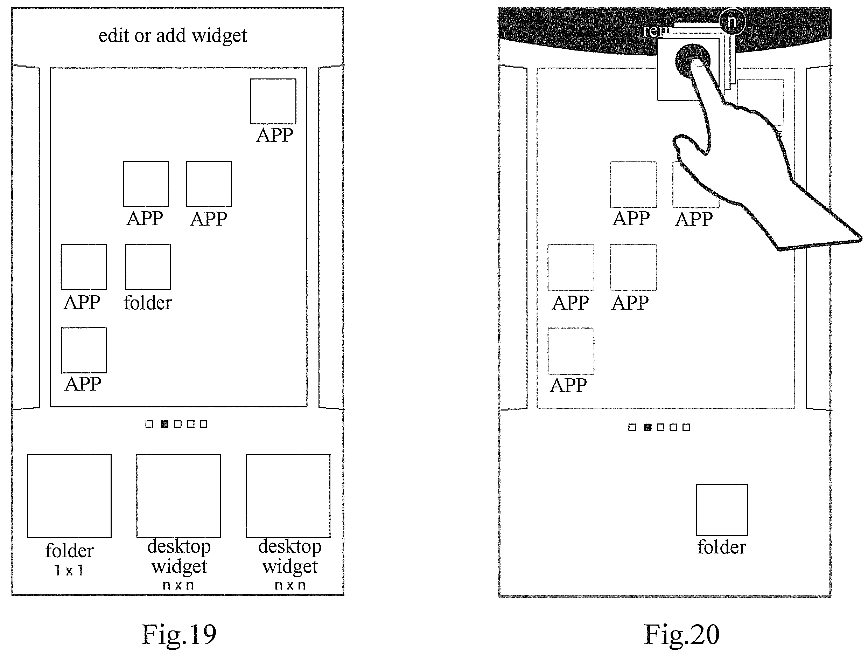

Fig. 19 is an illustrative diagram showing a display effect that the folder is generated through overlaying.

### (4) removing a plurality of icons

The present disclosure also provides the removing of a plurality of icons, which may be as follows: if the target icon is long pressed by the user (i.e., pressed over the preset time), a removing bar is displayed at the second preset area (i.e., the top part of the screen).

If the target icon is dragged to the second preset area by the user, the user is prompted to determine whether the APP corresponding to the target icon is uninstalled.

Fig. 20 is a diagram showing a display effect that the user drags the target icon to the removing bar.

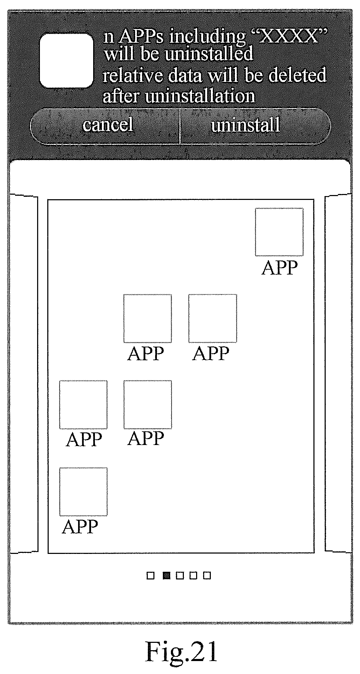

Fig. 21 is an illustrative diagram showing an effect of the prompt for removing.

When receiving an instruction of confirming the removing from the user, the target icon is removed and the APP corresponding to the target icon is uninstalled.

When receiving an instruction of cancelling the removing from the user, the target icon is reverted to the first preset area.

Preferably, the widget having been arranged on the screen cannot be operated in the batch arranging mode.

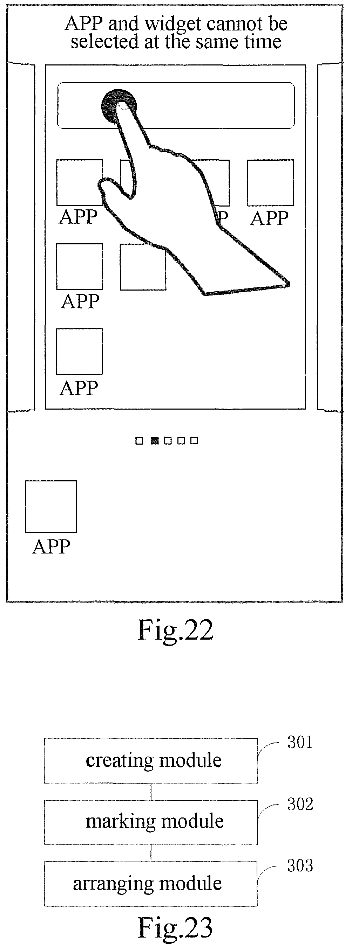

Fig. 22 is a diagram showing a display effect that the user clicks the widget in the batch arranging mode.

According to the method for arranging icons provided by the embodiments in the present disclosure, the buffer region for storing the icons to be arranged may be created to allow arranging operation for a plurality of icons, so that the operation for arranging icons is easy and timesaving; meanwhile, the user may go back on his words during the arranging process of a plurality of icons since the buffer region may temporarily store the icons to be arranged selected by the user, for example, it is unnecessary for the user to arrange the plurality of icons to be arranged selected by the user at a certain location, such that the operation for arranging icons becomes more humane.

As shown in Fig. 23, an apparatus for arranging icons is provided by the embodiments of the present disclosure. The apparatus includes:
a creating module 301 configured to create a buffer region;
a marking module 302 configured to mark icons selected by a user as icons to be arranged and store the icons to be arranged in the buffer region; and
an arranging module 303 configured to perform an arranging operation corresponding to an arranging instruction issued by the user on the icons to be arranged in the buffer region according to the arranging instruction.

Preferably, the apparatus further includes:
an edit entering module configured, before the creating module creates the buffer region, to make a desktop enter an edit mode and to set a first preset area on the desktop as a plug-in selecting area for selection by the user.

Preferably, the marking module 302 includes:
a creating unit configured, if it is detected that any icon on the desktop is clicked, to create the buffer region and to set the first preset area on the desktop as a display area for the icons to be arranged; and
a display unit configured to mark at least one icon selected by the user as the icons to be arranged, to store the icons to be arranged in the buffer region, and to display the icons to be arranged in the first preset area.

Preferably, a first operating unit is configured to mark the at least one icon selected by the user as the icons to be arranged in order of a sequence that icons are selected by the user and to store the icons to be arranged in the buffer region, and to display the icons selected by the user in the first preset area in order of the sequence that icons are selected by the user.

Preferably, if the icon selected by the user is a folder icon, the step of marking the icon selected by the user as the icons to be arranged and storing them in the buffer region adopts the following manner:
all icons in the folder are displayed, and at least one icon in the folder selected by the user is marked as the icons to be arranged and stored in the buffer region.

Preferably, the apparatus further includes:
a closing module configured, after the marking module has marked the at least one icon in the folder selected by the user as the icons to be arranged and stored the icons to be arranged in the buffer region, to close the folder if it is detected that any area in the display area of the folder other than areas occupied by each icon and a title of the folder is clicked.

Preferably, the arranging module 303 is configured, if the icon to be arranged in the first preset area is clicked, to place the clicked icons in the first empty space on the desktop as the target icon.

Preferably, the arranging module 303 includes:
a first triggering unit configured, if any icon to be arranged in the first preset area is pressed over a preset time, to set the icon to be arranged which has been pressed over the preset time as a target icon, and to set a second preset area on the desktop as a display area for a removing bar;
a first arranging unit configured, if the target icon is dragged to the second preset area, to remove the target icon and uninstall APP corresponding to the target icon;
a second arranging unit configured, if the target icon is dragged to a location without an icon on the desktop, to fill the target icon into the location or fill the target icon into the location through inserting and pushing;
a third arranging unit configured, if the target icon is dragged to a region occupied by an icon on the desktop, to generate a folder with a preset name at the region occupied by the icon and to put both of the icon occupying the region and the target icon into the folder with the preset name.

Preferably, the arranging module 303 includes:
a second triggering unit configured, if a preset event is triggered, to display a number of all the icons to be arranged stored in the buffer region and to set all the icons to be arranged stored in the buffer region as the target icon;
a fourth arranging unit configured, if the target icon is clicked, to fill the target icon into the empty spaces on the desktop one by one in order of the sequence that the icons are selected by the user;
a fifth arranging unit configured, if the target icon is pressed over the preset time, to set the second preset area as the display area of the removing bar, and if the target icon is dragged to the second preset area, to remove the target icon and uninstall the APPs corresponding to the target icon;
a sixth arranging unit configured, if the target icon is dragged to the region occupied by an icon on the desktop, to generate the folder with the preset name at the region occupied by the icon, and to put the icon occupying the region and the target icon into the folder with the preset name; and
a seventh arranging unit configured, if the target icon is dragged to the location without an icon on the desktop, to fill the target icon into the location or to fill the target icon into the location through inserting and pushing.

Preferably, it may be achieved in the following manner that the target icon is filled into the empty spaces on the desktop in order of the sequence that the icons are selected by the user:
it is determined that whether the empty spaces on the desktop is enough;
if the empty spaces on the desktop are enough, the target icon is filled into the empty spaces on the desktop one by one in order of the sequence that the icons are selected by the user; and
if the empty spaces on the desktop are not enough, icons to be filled are determined according to the number of the empty spaces and the sequence that the icons are selected by the user, and the icons to be filled are filled into the empty spaces on the desktop one by one in order of the sequence that the icons are selected by the user.

Preferably, the preset event may be an event that two contacts moves relative to one another occurred in the first preset area; or an event that a single contact unilaterally moves occurred in the first preset area.

The apparatus further includes:
a removing module configured, after the arranging module performs the arranging operation corresponding to the arranging instruction issued by the user on the icons to be arranged in the buffer region according to the arranging instruction, to remove the icon to be arranged stored in the buffer region which has been arranged.

According to the apparatus for arranging icons provided by the embodiment of the disclosure, the buffer region for storing the icons to be arranged is created to allow arranging operation of a plurality of icons, so that the operation for arranging icons is easy and timesaving; meanwhile, the user may go back on his words during the arranging process of a plurality of icons since the buffer region may temporarily store the icons to be arranged selected by the user, for example, it is unnecessary for the user to arrange the selected plurality of icons to be arranged on a certain location, so that the operation for arranging icons becomes more humane.

Additionally, the embodiments of the present disclosure also provides a device, which includes:
one or more processors;
a memory;
a display screen; and
one or more modules stored in the memory and configured to be performed by the one or more processors, the one or more modules are configured to have the following functions:
   creating a buffer region, marking icons selected by a user as icons to be arranged and storing the icons to be arranged in the buffer region;
   performing an arranging operation corresponding to an arranging instruction issued by the user on the icons to be arranged in the buffer region according to the arranging instruction.

Preferably, the one or more modules may be further configured to have the following functions:
before the buffer region is created, making a desktop enter an edit mode and setting a first preset area on the desktop as a plug-in selecting area for selection by the user.

Preferably, it may be achieved in the following manner that the buffer region is created, the icons selected by the user are marked as icons to be arranged and stored in the buffer region:
when it is detected that any icon on the desktop is clicked, the buffer region is created and the first preset area on the desktop is set as a display area for the icons to be arranged; and
at least one icon selected by the user is marked as the icons to be arranged, is stored in the buffer region, and is displayed in the first preset area.

Preferably, it may be achieved in the following manner that the at least one icon selected by the user is marked as the icons to be arranged, is stored in the buffer region and is displayed in the first preset area:
at least one icon selected by the user is marked as the icons to be arranged nd stored in the buffer region in order of the sequence that icons are selected by the user a, and is displayed in the first preset area in order of the sequence that icons are selected by the user.

Preferably, it may be achieved in the following manner that if the icon selected by the user is a folder icon, the icon selected by the user is marked as the icons to be arranged and stored in the buffer region:
all the icons in the folder are displayed, and at least one icon in the folder selected by the user is marked as the icons to be arranged and stored in the buffer region.

Preferably, the one or more modules also may be configured to have the following functions:
after at least one icon in the folder selected by the user is marked as the icons to be arranged and stored in the buffer region, closing the folder if it is detected that any area in the display area of the folder other than areas occupied by each icon and a title of the folder is clicked.

Preferably, it may be achieved in the following manner that an arranging operation corresponding to an arranging instruction issued by the user is performed on the icons to be arranged in the buffer region according to the arranging instruction:
if the icon to be arranged in the first preset area is clicked, the clicked icon is placed on the first empty space on the desktop as the target icon.

Preferably, it may be achieved in the following manner that the arranging operation corresponding to the arranging instruction issued by the user is performed on the icons to be arranged in the buffer region according to the arranging instruction:
if any icon to be arranged in the first preset area is pressed over a preset time, the icon which has been pressed over the preset time is set as the target icon, and a second preset area on the desktop is set as a display area for a removing bar;
if the target icon is dragged to the second preset area, the target icon is removed and an APP corresponding to the target icon is uninstalled;
if the target icon is dragged to a location without an icon on the desktop, the location is filled with the target icon, or the target icon is filled into the location through inserting and pushing; and
if the target icon is dragged to a region occupied by an icon on the desktop, a folder with a preset name is generated at the region occupied by the icon and both of the icon occupying the region and the target icon are put into the folder with the preset name.

Preferably, it may be achieved in the following manner that the arranging operation corresponding to the arranging instruction issued by the user is performed on the icons to be arranged in the buffer region according to the arranging instruction:
if a preset event is triggered, a number of all the icons to be arranged stored in the buffer region is displayed, and all the icons to be arranged stored in the buffer region are set as the target icon;
if the target icon is clicked, the target icon is filled into the empty spaces on the desktop one by one in order of the sequence that the icons are selected by the user;
if the target icon is pressed over the preset time, the second preset area is set as the display area for the removing bar, and if the target icon is dragged to the second preset area, the target icon is removed and the APP corresponding to the target icon is uninstalled;
if the target icon is dragged to the region occupied by an icon on the desktop, a folder with a preset name is generated at the region occupied by the icon and both of the icon occupying the region and the target icon are put into the folder with the preset name; and
if the target icon is dragged to the location without an icon on the desktop, the location is filled by the target icon, or the target icon is filled into the location through inserting and pushing.

Preferably, it may be performed in the following manner that the target icon is filled into the empty spaces on the desktop one by one in order of the sequence that the icons are selected by the user:
it is determined that whether the empty spaces on the desktop is enough;
if the empty spaces on the desktop are enough, the target icon is filled into the empty spaces on the desktop one by one in order of the sequence that the icons are selected by the user;
if the empty spaces on the desktop are not enough, icons to be filled are determined according to the number of the empty spaces and the sequence that the icons are selected by the user, and the icons to be filled are filled into the empty spaces on the desktop one by one in order of the sequence that the icons are selected by the user.

Preferably, the preset event may be an event that two contacts moves relative to one another occurred in the first preset area; or an event that a single contact unilaterally moves occurred in the first preset area.

Preferably, the one or more modules may be configured to also have the following function:
after the arranging operation corresponding to the arranging instruction issued by the user is performed on the icons to be arranged in the buffer region according to the arranging instruction, removing the icon to be arranged which has been arranged from the buffer region.

According to the device in the embodiment of the disclosure, the buffer region for storing the icons to be arranged is created to allow arranging operation of a plurality of icons, so that the operation for arranging icons is easy and timesaving; meanwhile, the user may go back on his words during the arranging process of a plurality of icons since the buffer region may temporarily store the icons to be arranged selected by the user, so that the operation for arranging icons becomes more humane.

Additionally, the embodiment of the present disclosure also provides a nonvolatile readable storage medium including one or more programs. If the one or more programs are applied to a device with a touch screen, the device will have the function of:
creating a buffer region, marking icons selected by a user as icons to be arranged and storing the icons to be arranged in the buffer region; and
performing an arranging operation corresponding to an arranging instruction issued by the user on the icons to be arranged in the buffer region according to the arranging instruction.

Preferably, the one or more programs may allow the device to have the function of:
making a desktop enter an edit mode and setting a first preset area on the desktop as a plug-in selecting area for selection by the user, before the buffer region is created.

Preferably, it may be achieved in the following manner that the buffer region is created, icons selected by the user are marked as icons to be arranged and stored in the buffer region:
when it is detected that any icon on the desktop is clicked, the buffer region is created and the first preset area on the desktop is set as a display area for the icons to be arranged; and
at least one icon selected by the user is marked as the icons to be arranged, is stored in the buffer region, and is displayed in the first preset area.

Preferably, it may be achieved in the following manner that at least one icon selected by the user is marked as the icons to be arranged, is stored in the buffer region and is displayed in the first preset area:
at least one icon selected by the user is marked as the icons to be arranged in order of the sequence that icons are selected by the user and is stored in the buffer region, and is displayed in the first preset area in order of the sequence that icons are selected by the user.

Preferably, it may be achieved in the following manner that if the icon selected by the user is a folder icon, the icon selected by the user is marked as the icons to be arranged and is stored in the buffer region:
All the icons in the folder are displayed, and at least one icon in the folder selected by the user is marked as the icons to be arranged and is stored in the buffer region.

Preferably, the one or more programs may allow the device to have the function of:
closing the folder if it is detected that any area in the display area of the folder other than areas occupied by each icon and a title of the folder is clicked, after at least one icon in the folder selected by the user is marked as the icons to be arranged and is stored in the buffer region.

Preferably, it may be achieved in the following manner that an arranging operation corresponding to an arranging instruction issued by the user is performed on the icons to be arranged in the buffer region according to the arranging instruction:
if the icon to be arranged in the first preset area is clicked, the clicked icon is placed on the first empty space on the desktop as the target icon.

Preferably, it may be achieved in the following manner that an arranging operation corresponding to an arranging instruction issued by the user is performed on the icons to be arranged in the buffer region according to the arranging instruction:
if any icon to be arranged in the first preset area is pressed over a preset time, the icon which has been pressed over the preset time is set as the target icon, and a second preset area on the desktop is set as a display area for a removing bar;
if the target icon is dragged to the second preset area, the target icon is removed and an APP corresponding to the target icon is uninstalled;
if the target icon is dragged to a location without an icon on the desktop, the location is filled by the target icon, or the target icon is filled into the location through inserting and pushing; and
if the target icon is dragged to a region occupied by an icon on the desktop, a folder with a preset name is generated at the region occupied by the icon and both of the icon occupying the region and the target icon are put into the folder with the preset name.

Preferably, it may be achieved in the following manner that the arranging operation corresponding to the arranging instruction issued by the user is performed on the icons to be arranged in the buffer region according to the arranging instruction:
if a preset event is triggered, the number of all the icons to be arranged stored in the buffer region is displayed, and all the icons to be arranged stored in the buffer region are set as the target icon;
if the target icon is clicked, the target icon is filled into the empty spaces on the desktop in order of the sequence that the icons are selected by the user;
if the target icon is pressed over a second preset time, the second preset area is set as the display area for the removing bar, and if the target icon is dragged to the second preset area, the target icon is removed and the APP corresponding to the target icon is removed;
if the target icon is dragged to a region occupied by an icon on the desktop, a folder with a preset name is generated at the region occupied by the icon and both of the icon occupying the region and the target icon are put into the folder with the preset name; and
if the target icon is dragged to a location without an icon on the desktop, the location is filled by the target icon, or the target icon is filled into the location through inserting and pushing.

Preferably, it may be achieved in the following manner that the target icon is filled into the empty spaces on the desktop in order of the sequence that the icons are selected by the user:
it is determined that whether the empty spaces on the desktop are enough;
if the empty spaces on the desktop are enough, the target icon is filled into the empty spaces on the desktop one by one in order of the sequence that the icons are selected by the user;
if the empty spaces on the desktop are not enough, icons to be filled are determined according to the number of the empty spaces and the sequence that the icons are selected by the user, and the icons to be filled are filled into the empty spaces on the desktop one by one in order of the sequence that the icons are selected by the user.

Preferably, the preset event may be an event that two contacts moves relative to one another occurred in the first preset area; or an event that a single contact unilaterally moves occurred in the first preset area.

Preferably, the one or more programs may allow the apparatus to have the function of:
removing the icon to be arranged which has been arranged from the buffer region, after the arranging operation corresponding to the arranging instruction issued by the user is performed on the icons to be arranged in the buffer region according to the arranging instruction.

When the storage medium provided by the embodiment of the present disclosure is applied to the device, the buffer region for storing the icons to be arranged is created to allow arranging operation of a plurality of icons, so that the operation for arranging icons is easy and timesaving; meanwhile, the user may go back on his words during the arranging process of a plurality of icons since the buffer region may temporarily store the icons to be arranged selected by the user, so that the operation for arranging icons becomes more humane.

Through the above description, the person skilled in the art should have a good understanding that the embodiments of the present disclosure may be achieved by hardware or combination of software and a necessary general hardware platform. Based on the understanding, the technical solutions of the embodiments of the present disclosure may be embodied as a software product. The software product may be stored in a nonvolatile storage medium (e.g., CD-ROM, USB flash disk, mobile HDD) and includes several commands to allow a computer device (e.g., personal computer, server, or network device) to perform the methods according to embodiments of the present disclosure.

The person skilled in the art should appreciate that the drawings are exemplary diagrams of preferred embodiments, in which modules or flow may not be necessary for the present disclosure.

The person skilled in the art should appreciate that the modules in the apparatus may be distributed in the apparatus according to the corresponding description, or may be changed to be located in one or more apparatuses. The modules in the above embodiments may be integrated as a single module or may be further divided into a plurality of sub-modules.

The number of the embodiments is only used for ease of description rather than quality of the embodiments.

Obviously, the person skilled in the art may modify or change the solutions of the present disclosure without departing the spirit and protection scope of the present disclosure. Therefore, all the modifications, equivalent substitution, and improvements which are made within sprits and principles of the present disclosure shall fall within the protection scope of the present disclosure.

## Claims

1. A method for arranging icons, **characterized in that** the method comprises:
creating a buffer region, marking icons selected by a user as icons to be arranged and storing the icons to be arranged in the buffer region; and
performing an arranging operation corresponding to an arranging instruction issued by the user on the icons to be arranged in the buffer region according to the arranging instruction.

2. The method according to claim 1, **characterized in that** before the creating the buffer region, the method further comprises:
making a desktop enter an edit mode, and setting a first preset area on the desktop as a plug-in selecting area for selection by the user.

3. The method according to claim 2, **characterized in that** the creating the buffer region, marking the icons selected by the user as the icons to be arranged and storing icons to be arranged in the buffer region comprises:
if any icon on the desktop is detected as clicked, creating the buffer region, and setting the first preset area on the desktop as a display area for the icons to be arranged; and
marking at least one icon selected by the user as the icons to be arranged, storing the icons to be arranged in the buffer region and displaying them in the first preset area.

4. The method according to claim 3, **characterized in that** the marking at least one icon selected by the user as the icons to be arranged, storing the icons to be arranged in the buffer region and displaying them in the first preset area comprises:
marking the at least one icon selected by the user as the icons to be arranged and storing the icons to be arranged in the buffer region in order of a sequence that the icons are selected by the user, and displaying the at least one icon selected by the user in the first preset area one by one in order of the sequence that the icons are selected by the user.

5. The method according to claim 1, **characterized in that** if the icon selected by the user is a folder icon, the marking the icon selected by the user as the icons to be arranged and storing the icons to be arranged in the buffer region comprises:
displaying all the icons in the folder, marking at least one icon in the folder selected by the user as the icons to be arranged and storing the icons to be arranged in the buffer region.

6. The method according to claim 5, **characterized in that** after the marking at least one icon in the folder selected by the user as the icons to be arranged and storing the icons to be arranged in the buffer region, the method further comprises:
closing the folder if any area in a display area of the folder other than areas occupied by all the icons in the folder and a title of the folder is detected as clicked.

7. The method according to claim 3, **characterized in that** the performing the arranging operation corresponding to the arranging instruction issued by the user on the icons to be arranged in the buffer region according to the arranging instruction comprises:
if the icon to be arranged in the first preset area is clicked, placing the clicked icon on the first empty space on the desktop as a target icon.

8. The method according to claim 3, **characterized in that** the performing the arranging operation corresponding to the arranging instruction issued by the user on the icons to be arranged in the buffer region according to the arranging instruction comprises:
if any icon to be arranged in the first preset area is pressed over a preset time, setting the icon which has been pressed over the preset time as a target icon, and setting a second preset area on the desktop as a display area for a removing bar;
if the target icon is dragged to the second preset area, removing the target icon and uninstalling an APP corresponding to the target icon;
if the target icon is dragged to a location without an icon on the desktop, filling the target icon into the location, or filling the target icon into the location through inserting and pushing; and
if the target icon is dragged to a region occupied by an icon on the desktop, generating a folder with a preset name at the region occupied by the icon, and putting both of the icon occupying the region and the target icon into the folder with the preset name.

9. The method according to claim 3, **characterized in that** the performing the arranging operation corresponding to the arranging instruction issued by the user on the icons to be arranged in the buffer region according to the arranging instruction comprises:
if a preset event is triggered, displaying a number of all the icons to be arranged stored in the buffer region, and setting all the icons to be arranged stored in the buffer region as a target icon;
if the target icon is clicked, filling the target icon into empty spaces on the desktop one by one in order of the sequence that the icons are selected by the user;
if the target icon is pressed over a preset time, setting a second preset area on the desktop as a display area for a removing bar, and if the target icon is dragged to the second preset area, the target icon is removed and an APP corresponding to the target icon is uninstalled;
if the target icon is dragged to a region occupied by an icon on the desktop, generating a folder with a preset name at the region occupied by the icon, and putting both of the icon occupying the region and the target icon into the folder with the preset name; and
if the target icon is dragged to a location without an icon on the desktop, filing the target icon into the location, or filling the target icon into the location through inserting and pushing.

10. The method according to claim 9, **characterized in that** the filling the target icon into the empty spaces on the desktop one by one in order of the sequence that the icons are selected by the user comprises:
determining whether the empty spaces on the desktop are enough;
if the empty spaces on the desktop are enough, filling the target icon into the empty spaces on the desktop one by one in order of the sequence that the icons are selected by the user; and
if the empty spaces on the desktop are enough, determining icons to be filled according to the number of the empty spaces and the sequence that the icons are selected by the user, and filling the icons to be filled into the empty spaces on the desktop one by one in order of the sequence that the icons are selected by the user.

11. The method according to claim 9, **characterized in that** the preset event is an event that two contacts moves relative to one another occurred in the first preset area, or an event that a single contact unilaterally moves occurred in the first preset area.

12. The method according to any one of claims 1-11, **characterized in that** after the performing the arranging operation corresponding to the arranging instruction issued by the user on the icons to be arranged in the buffer region according to the arranging instruction, the method further comprises:
removing the icons to be arranged, which have been arranged, from the buffer region.

13. An apparatus for arranging icons, **characterized in that** the apparatus comprises:
a creating module configured to create a buffer region;
a marking module configured to mark icons selected by a user as icons to be arranged and stored the icons to be arranged in the buffer region; and
an arranging module configured to perform an arranging operation corresponding to an arranging instruction issued by the user on the icons to be arranged in the buffer region according to the arranging instruction.

14. The apparatus according to claim 1, **characterized in that** the apparatus further comprises:
an edit entering module configured, before the creating module creates the buffer region, to make a desktop enter an edit mode and to set a first preset area on the desktop as a plug-in selecting area for selection by the user.

15. The apparatus according to claim 14, **characterized in that** the marking module comprises:
a creating unit configured, if any icon on the desktop is detected as clicked, to create the buffer region and to set the first preset area on the desktop as a display area for the icons to be arranged; and
a display unit configured to mark at least one icon selected by the user as the icons to be arranged, to store the icons to be arranged in the buffer region, and to display the icons to be arranged in the first preset area.

16. The apparatus according to claim 15, **characterized in that** a first operating unit is configured to mark the at least one icon selected by the user as the icons to be arranged in order of a sequence that icons are selected by the user, to store the icons to be arranged in the buffer region, and to display the icons to be arranged in the first preset area in order of the sequence that icons are selected by the user.

17. The apparatus according to claim 13, **characterized in that** if the icon selected by the user is a folder icon, the marking the icon selected by the user as the icons to be arranged and storing the icons to be arranged in the buffer region are performed by:
displaying all the icons in the folder, and marking at least one icon in the folder selected by the user as the icons to be arranged and storing the icons to be arranged in the buffer region.

18. The apparatus according to claim 17, **characterized in that** the apparatus further comprises:
a closing module configured, after the marking module has marked the at least one icon in the folder selected by the user as the icons to be arranged and stored the icons to be arranged in the buffer region, to close the folder if any area in a display area of the folder other than areas occupied by each icon and a title of the folder is detected as clicked.

19. The apparatus according to claim 15, **characterized in that** the arranging module is configured, if the icon to be arranged in the first preset area is clicked, to place the clicked icon on the first empty space on the desktop as a target icon.

20. The apparatus according to claim 15, **characterized in that** the arranging module comprises:
a first triggering unit configured, if any icon to be arranged in the first preset area is pressed over a preset time, to set the icon which has been pressed over the preset time as a target icon, and to set a second preset area on the desktop as a display area for a removing bar;
a first arranging unit configured, if the target icon is dragged to the second preset area, to remove the target icon and to uninstall an APP corresponding to the target icon;
a second arranging unit configured, if the target icon is dragged to a location without an icon on the desktop, to fill the target icon into the location or to fill the target icon into the location through inserting and pushing; and
a third arranging unit configured, if the target icon is dragged to a region occupied by an icon on the desktop, to generate a folder with a preset name at the region occupied by the icon and to put both of the icon occupying the region and the target icon into the folder with the preset name.

21. The apparatus according to claim 15, **characterized in that** the arranging module comprises:
a second triggering unit configured, if a preset event is triggered, to display the number of all the icons to be arranged stored in the buffer region and to set all the icons to be arranged stored in the buffer region as a target icon;
a fourth arranging unit configured, if the target icon is clicked, to fill the target icon into empty spaces on the desktop one by one in order of the sequence that the icons are selected by the user;
a fifth arranging unit configured, if the target icon is pressed over a preset time, to set a second preset area as a display area for a removing bar, and if the target icon is dragged to the second preset area, the fifth arranging unit is configured to remove the target icon and to uninstall an APP corresponding to the target icon;
the sixth arranging unit configured, if the target icon is dragged to a region occupied by an icon on the desktop, to generate a folder with a preset name at the region occupied by the icon, and to put the icon occupying the region and the target icon into the folder with the preset name; and
a seventh arranging unit configured, if the target icon is dragged to a location without an icon on the desktop, to fill the target icon into the location or to fill the target icon into the location through inserting and pushing.

22. The apparatus according to claim 21, **characterized in that** the target icon is filled into the empty spaces on the desktop one by one in order of the sequence that the icons are selected by the user are performed by:
determining whether the empty spaces on the desktop are enough;
if the empty spaces on the desktop are enough, filling the target icon into the empty spaces on the desktop one by one in order of the sequence that the icons are selected by the user; and
if the empty spaces on the desktop are enough, determining icons to be filled according to the number of the empty spaces and the sequence that the icons are selected by the user, and filling the icons to be filled into the empty spaces on the desktop one by one in order of the sequence that the icons are selected by the user.

23. The apparatus according to claim 21, **characterized in that** the preset event is an event that two contacts moves relative to one another occurred in the first preset area, or an event that a single contact unilaterally moves occurred in the first preset area.

24. The apparatus according to any one of claims 13-23, **characterized in that** the apparatus further comprises:
a removing module configured, after the arranging module performs the arranging operation corresponding to the arranging instruction issued by the user on the icons to be arranged in the buffer region according to the arranging instruction, to remove the icon to be arranged which has been arranged from the buffer region.

25. A device, **characterized in that** the device comprises:
one or more processors;
a memory;
a display screen; and
one or more modules stored in the memory and configured to be performed by the one or more processors, the one or more modules are configured to have the following functions:
creating a buffer region, marking icons selected by a user as icons to be arranged and storing the icons to be arranged in the buffer region; and
performing an arranging operation corresponding to an arranging instruction issued by the user on the icons to be arranged in the buffer region according to the arranging instruction.
